# EUROPEAN PATENT SPECIFICATION

(11) **EP 3 699 707 B1**
(45) Date of publication and mention of the grant of the patent: **30.10.2024**
(21) Application number: 20157732.7
(22) Date of filing: 17.02.2020
(51) Int. Cl.: G05B 19/418

(54) **INFORMATION PROCESSING DEVICE, INFORMATION PROCESSING METHOD, AND STORAGE MEDIUM**
INFORMATIONSVERARBEITUNGSVORRICHTUNG, INFORMATIONSVERARBEITUNGSVERFAHREN UND SPEICHERMEDIUM
DISPOSITIF DE TRAITEMENT D'INFORMATIONS, PROCÉDÉ DE TRAITEMENT D'INFORMATIONS ET SUPPORT D'ENREGISTREMENT

(30) Priority: 22.02.2019 JP 2019030581
(43) Date of publication of application: 26.08.2020
(73) Proprietor: TOYOTA JIDOSHA KABUSHIKI KAISHA, Toyota-shi, Aichi-ken, 471-8571 (JP)
(72) Inventor: DOGISHI, Hiromichi, Aichi-ken, 471-8571 (JP); SHITARA, Masaki, Aichi-ken, 471-8571 (JP); YAMASHITA, Keiji, Aichi-ken, 471-8571 (JP); KANEKO, Nozomi, Aichi-ken, 471-8571 (JP); YAMAMURO, Naoki, Aichi-ken, 471-8571 (JP); TANIMORI, Shunsuke, Aichi-ken, 471-8571 (JP); SHIRAISHI, Ryoichi, Aichi-ken, 471-8571 (JP)
(74) Representative: J A Kemp LLP

(56) References cited:
- DE-A1- 102013 000 569
- DE-A1- 102016 010 983

## Description

### BACKGROUND OF THE INVENTION

### 1. Field of the Invention

The invention relates to information processing devices, information processing methods, and storage media.

### 2. Description of Related Art

A system is known that checks whether delivery can be made by an autonomous moving body when package delivery by an autonomous moving body is designated (see, for example, Japanese Unexamined Patent Application Publication No. 2018-124676 (JP 2018-124576 A)). DE 10 2016 010 983 A1 and DE 10 2013 000 569 A1 disclose systems and methods for assembling devices.

### SUMMARY OF THE INVENTION

When producing articles, items necessary to produce the articles are typically collected at one location such as a factory. In this case, a place to store the items is required, and it is costly to collect the items. When producing a predetermined article, the locations of items necessary to produce the article can be set in advance as destinations and a vehicle can be controlled to autonomously travel through the locations of the items by using related art. In this case, articles that can be produced may be restricted by the destinations set in advance, or change of destinations may be required every time the article to be produced is changed.

The invention provides an information processing device, an information processing method, and a storage medium that are used to produce an article using an autonomous moving body.

A first aspect of the invention relates to an information processing device as defined in appended claim 1.

In the first aspect, the control unit may be configured to perform functions including obtaining information on the maker and information on the item. The control unit may be configured to perform functions including specifying the maker and the item based on the obtained information on the maker and the obtained information on the item.

In the above aspect, the control unit is configured to perform functions including specifying parts that constitute the article as the item to be used to produce the article.

In the above aspect, the control unit may be s configured so that, when the parts include a part that is suppliable from a plurality of locations, the control unit performs functions including selecting one of the same parts from the plurality of locations according to a predetermined rule.

In the above aspect, the control unit may be configured to perform functions including specifying a tool to be used to produce the article as the item to be used to produce the article.

In the above aspect, the control unit may be configured to perform functions including generating the operation command to cause the moving body to travel through the location of the maker and the location of the item in an order in which the article is produced.

In the above aspect, the control unit may be configured so that, when there are a plurality of combinations of the maker and the item corresponding to the article for specifying the maker and the item, the control unit makes an inquiry to the user about which combination to select and specifies the maker and the item based on the combination selected by the user.

In the above aspect, the control unit may be configured to perform functions including including the user in the maker based on the request received from the user, or including an item provided by the user in the item to be used to produce the article based on the request received from the user.

In the above aspect, the control unit may be configured so that, when there is no combination of the maker and the item corresponding to the article for specifying the maker and the item, the control unit notifies the user that the article is not producible.

A second aspect of the invention relates to an information processing method as defined in appended claim 7.

In the second aspect, information on the maker and information on the item may be obtained, and the maker and the item may be specified based on the obtained information on the maker and the obtained information on the item.

In the above aspect, parts that constitute the article are specified as the item to be used to produce the article.

In the above aspect, when the parts include a part that is suppliable from a plurality of locations, one of the same parts from the plurality of locations may be selected according to a predetermined rule.

In the above aspect, a tool to be used to produce the article may be specified as the item to be used to produce the article.

In the above aspect, the operation command may be generated to cause the moving body to travel through the location of the maker and the location of the item in an order in which the article is produced.

In the above aspect, when there are a plurality of combinations of the maker and the item corresponding to the article for specifying the maker and the item, the user may be inquired for which combination to select, and the maker and the item may be specified based on the combination selected by the user.

In the above aspect, the information processing method may further include including the user in the maker or including an item provided by the user in the item to be used to produce the article based on the request received from the user.

In the above aspect, the information processing method may further include notifying the user that the article is not producible when there is no combination of the maker and the item corresponding to the article for specifying the maker and the item.

A third aspect of the invention relates to a non-transitory storage medium as defined in appended claim 14.

According to the invention, an article is produced using an autonomous moving body.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating a schematic configuration of an autonomous driving system according to an embodiment;
FIG. 2 is a diagram illustrating a travel route a vehicle takes to produce an article;
FIG. 3 is a block diagram schematically illustrating an example of the configurations of a vehicle, a first terminal, a second terminal, and a server that form the autonomous driving system according to the embodiment;
FIG. 4 is a diagram illustrating an example of the function configuration of the server;
FIG. 5 is a diagram illustrating the table configuration of article information;
FIG. 6 is a diagram illustrating the table configuration of vehicle information;
FIG. 7 is a diagram illustrating the table configuration of production information;
FIG. 8 is a diagram illustrating an example of the functional configuration of the vehicle;
FIG. 9 is a diagram illustrating an example of the functional configuration of the first terminal;
FIG. 10 is a diagram illustrating an example of a screen that is displayed on an output unit of the first terminal when a first user requests production of an article;
FIG. 11 is a diagram illustrating an example of the functional configuration of the second terminal;
FIG. 12 is a diagram illustrating an example of a screen that is displayed on an output unit of the second terminal when a second user registers selectability of a part or a maker;
FIG. 13 is an example of a flowchart of a process of sending an operation command according to a first embodiment;
FIG. 14 is an example of a flowchart of a process of moving the vehicle according to the embodiment;
FIG. 15 is a diagram illustrating the table configuration of article information in an article information database (DB);
FIG. 16 is a diagram illustrating an example of a screen that is displayed on the output unit of the first terminal when the first user selects a part after the first user requests production of an article;
FIG. 17 is a diagram illustrating the table configuration of production information in a production information DB;
FIG. 18 is an example of a flowchart of a process of sending an operation command according to a second embodiment;
FIG. 19 is a diagram illustrating an example of a screen that is displayed on the output unit of the first terminal when the first user requests production of an article;
FIG. 20 is a diagram illustrating the table configuration of article information; and
FIG. 21 is an example of a flowchart of a process of sending an operation command according to a third embodiment.

### DETAILED DESCRIPTION OF EMBODIMENTS

A moving body that is controlled by an information processing device that is one aspect of the invention is a vehicle that autonomously travels based on an operation command. An article can be produced as the moving body travels according to the operation command. For example, the moving body can be loaded with an article that is being produced, an article that has been finished, and any part, tool, facility etc. that are necessary to produce an article. Examples of the article include automobiles, engines, transmissions, seats, chassis, vehicle interiors, and vehicle exteriors.

A control unit is configured to specify a maker of the article. The maker is a maker that handles a production request from the user, and especially a maker that deals with an article requested by the user. The maker of the article is a person or machine (e.g., a robot) that brings the article being produced close to completion, and for example, is a person or machine that attaches a part to the article being produced, processes the article being produced, processes a part to be attached to the article being produced, etc. The maker of the article may be, for example, a person or machine having specific techniques, specific skills, specific abilities, specific proficiency, etc. The maker of the article rides in the moving body and moves move with the moving body. The maker of the article may ride in the moving body from departure. There may be a plurality of makers of the article.

The control unit is configured to specify an item to be used to produce the article. The item is an item corresponding to the production request from the user, and especially an item corresponding to the article requested by the user. The "article" in the invention is produced in response to a request from the user, but the "item" in the invention is not something that is produced in response to a request from the user. The item to be used to produce the article may include parts that constitute the article or a tool to be used to produce the article. That is, the control unit may be configured to specify parts that constitute the article as the item to be used to produce the article. The control unit may be configured to specify a tool to be used to produce the article as the item to be used to produce the article. The item to be used to produce the article is an item that brings the article being produced close to completion, and for example, is an item that is to be attached to the article being produced, that is to be attached to a part to be attached to the article being produced, that processes the article being produced, etc. The "item" may include any tool, material, etc. that are necessary to attach a part etc. to the article being produced and any tool, material, etc. that are necessary to process the article being produced. Only one of the maker and the item may be required depending on the article. That is, depending on the article, the maker or the item may not be required to produce the article.

The control unit is configured to obtain information on a location of the maker and information on a location of the item. The information on the location of the maker is, for example, information indicating the location of the maker, a workplace of the maker, etc. and is information on a place to which the moving body travels when the maker produces the article. The information on the location of the item is, for example, information indicating the location of a warehouse that stores the item, a place where the item is attached to the article, etc. and is information on a place to which the moving body travels to get the item. The information on the location is not limited to the information indicating the location of the maker, the workplace of the maker, the location of the warehouse that stores the item, and the place where the item is attached to the article, but may include, for example, information indicating a place located within a predetermined range from those places. The predetermined range herein refers to a range in which the moving body can travel to produce the article. The information on the location of the maker and the information on the location of the item can be obtained from, for example, the user who manages the maker or the article or the maker that deals with production of the article. The information on the location may include, for example, information on the position indicated by the World Geodetic System (latitude and longitude), information on the address, etc.

The control unit is configured to generate an operation command for the moving body to cause the moving body to travel through the location of the maker and the location of the item. The operation command is generated by, for example, a server or the moving body. The operation command includes, for example, information on waypoints for the moving body and may further include information related to a travel route of the moving body. As the moving body travels through the location of the maker and the location of the item according to the operation command, a part can be attached to the article being produced, the article or the part can be processed, etc. at each waypoint. The article is in a finished state when the moving body finishes traveling through the waypoints.

As described above, the article is finished as the moving body travels via the maker and the item. It is therefore not necessary to keep a large number of parts in stock as compared to the case where the article is produced at a single factory. For example, even when an item that is hard to produce at places other than specific places (e.g., an item that can only be produced in areas with a small population due to loud noise that is made during production, an item that requires water containing specific components or lean water during production of the item and therefore can only be produced in areas where such water is available) or an item that can only be produced in small quantity (e.g., an item handmade by a skilled worker) is necessary, the moving body goes to such places. Accordingly, these items need not be produced at the factory and need not be kept in stock in the factory.

For example, when the maker needs to directly process etc. the article in order to finish the article, the maker can provide its techniques without going all the way to the factory. Since the maker can work using a part etc. carried by the mobile body, the maker does not need to keep the parts in stock.

The control unit may be configured to obtain information on the maker and information on the item and specify the maker and the item based on the obtained information on the maker and the obtained information on the item.

The information on the maker is, for example, information that is necessary for the user to select the maker of the article, information that is useful when the user selects the maker of the article, or information that is necessary to generate an operation command. The information on the maker may include, for example, information that can specify the maker, information on when the maker has its turn to be involved in production of the article, information on the fee to be charged when the user requests the maker to produce the article, information on evaluation of the maker by the users who requested the maker to produce an article in the past, information on the level of abilities of the maker, information on the time when the maker is available to produce the article, or information on the time required for the maker to produce the article. The information on the item is, for example, information that is necessary for the user to select the item, information that is useful when the user selects the item, or information that is necessary to generate an operation command. The information on the item may include, for example, information on the fee to be charged to use the item, information on evaluation of the item by the users who used the item in the past, information on the level of performance of the item, information on the time when the item is available for use, or information on the time required for producing the article using the item. Such information on the maker and information on the item may be provided to the user.

The control unit may be configured to generate the operation command that causes the moving body to travel through the location of the maker and the location of the item in the order in which the article is produced.

When producing the article, it may be necessary to attach, process, etc. parts in a desired order. In this case, the article can be produced in order by moving the moving body in this order. This order is determined according to the requested article or the maker and item corresponding to the article.

The control unit may be configured so that, in the case where there are a plurality of combinations of the maker and the item corresponding to the article when the control unit specifies the maker and the item, the control unit make an inquiry to the user about which combination to select and specifies the maker and the item based on the combination selected by the user. The user can thus select a combination that suits the user's preference from the plurality of combinations of the maker and the item. Accordingly, the article can be produced using parts and technicians that suit the user's needs.

The control unit may be configured to include the user in the maker or include an item provided by the user in the item based on the request received from the user. In this case, the user can be involved in production of the article. The user can therefore enjoy producing the article.

Embodiments of the invention will be described below with reference to the accompanying drawings. The configurations of the following embodiments are illustrative, and the invention is not limited to the configurations of the embodiments. The following embodiments can be combined in any way as long as the combination falls within the scope of the invention.

### First Embodiment

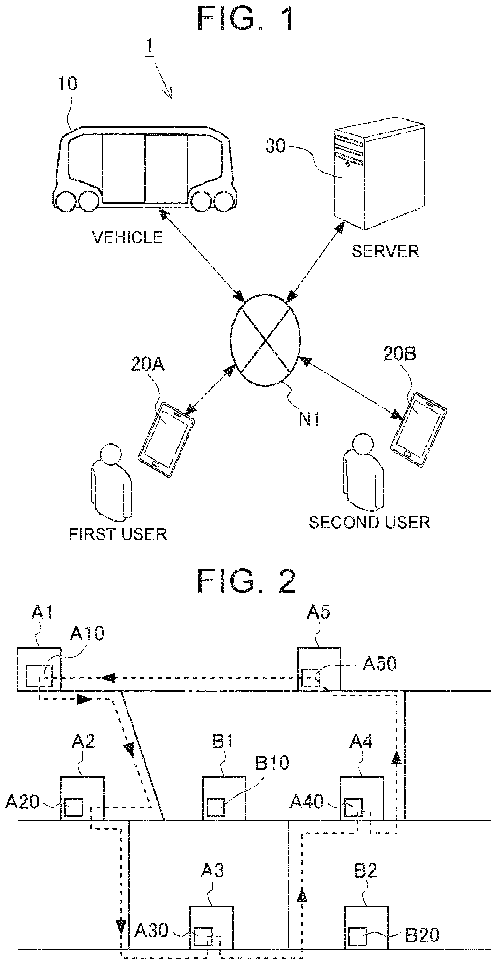

FIG. 1 is a diagram illustrating a schematic configuration of an autonomous driving system 1 according to an embodiment. The autonomous driving system 1 shown in FIG. 1 is a system for producing an article in a moving vehicle 10 or through waypoints when a first user requests production of the article via a first terminal 20A. A server 30 selects an item or a person according to the requested article. Parts that constitute an article will be mainly described below as an example of the "item". However, the "item" is not limited to parts, and for example, the "item" may include a tool to be used to produce an article. The server 30 generates an operation command for the vehicle 10 that causes the vehicle 10 to travel through the locations of parts or makers of the article. For example, the server 30 generates an operation command that causes the vehicle 10 to depart from a base, finish the article through waypoints, deliver the article that has been finished, and then return to the base. The server 30 sends the generated operation command to the vehicle 10. When the vehicle 10 receives the operation command, the vehicle 10 autonomously travels according to the received operation command.

The autonomous driving system 1 includes, for example, the vehicle 10, the first terminal 20A, a second terminal 20B, and the server 30. The number of vehicles 10 is not limited to one as illustrated in FIG. 1 and may be two or more. The vehicle 10 is a moving body that can autonomously travel based on operation commands that are generated by the server 30. The vehicle 10 is configured so that the vehicle 10 can be loaded with an article that is being produced and an article that has been finished. Any tool, facility, etc. that can be used to produce an article may be provided in the vehicle 10. The article may be produced either inside or outside the vehicle 10. In the following description, the "finished article" refers to an article that has been finished, and the "unfinished article" refers to an article that is being produced. The finished article according to the present embodiment may be an article that functions as a part or a component (assembly) in a subsequent process.

The first user in FIG. 1 is a user who operates the first terminal 20A and is a user who requests production of an article. When the first user inputs an article to the first terminal 20A, the server 30 selects parts and makers according to the article and generates an operation command that causes the vehicle 10 to travel through the locations of the parts and the makers. There may be a plurality of the first users, and there may be a plurality of the first terminals 20A according to the number of first users. A single first user may request production of a plurality of articles.

A second user in FIG. 1 is a user who operates the second terminal 20B and is a maker of a requested article and a user related to an item to be used to produce the article. Examples of the second user include a user who produces, processes, sells, assembles, and manages a part, a user who manages tools necessary to, for example, produce, process, and assemble a part, a user who processes an unfinished article, a user who attaches a part to an unfinished article, a user who provides skills, and a user who requests a maker to provide its skills. There may be a plurality of the second users, and there may be a plurality of the second terminals 20B according to the number of second users. The second user who produces, processes, and sells a part may be different from the second user who attaches the part to an unfinished article. An article may be produced while the vehicle 10 is stopped at a waypoint of the vehicle 10. According to the invention, the article is produced while the vehicle 10 is traveling to the next waypoint.

The second user may take an unfinished article out of the vehicle 10, attach a part to the unfinished article or process the unfinished article outside the vehicle 10, and then put the unfinished article or the finished article back into the vehicle 10. An article may be automatically produced by the facility provided in the vehicle 10 or may be automatically produced by a facility provided outside the vehicle 10. A user who is different from the second user and who receives a part or attaches a part may ride in the vehicle 10. The maker is a user who provides its skills in order to produce an article. The maker may be a user who attaches a part produced by the user or other person to an unfinished article, may be a user who, for example, processes an unfinished article loaded on the vehicle 10, or may be a user who attaches a part loaded on the vehicle 10 to an unfinished article. The maker may be a user who has skills in, for example, sheet metal working, welding, painting, etc. or may be a user who attaches a film, a sticker, etc. on an unfinished article. The maker may be a user who removes a part from a finished article and replaces the removed part with other part. This replacement includes repairs, retrofits, and modifications.

The vehicle 10, the first terminal 20A, the second terminal 20B, and the server 30 are connected to each other via a network N1. The network N1 is, for example, a worldwide public network such as the Internet, and a wide area network (WAN) or other communication network may be used as the network N1. The network N1 may include a telephone network such as mobile phones and a wireless network such as WiFi.

### Summary of Autonomous Driving System

A summary of the autonomous driving system according to the present embodiment will be given below. FIG. 2 is a diagram illustrating a travel route the vehicle 10 takes to produce an article. In FIG. 2, the vehicle 10 departs from a departure point A1, travels through waypoints A2, A3, A4, and A5 in this order, and returns to the departure point A1. B1 and B2 represent points through which the vehicle 10 does not travel. The departure point A1 is, for example, a base for the vehicle 10.

In FIG. 2, A10 represents an article input by the first user to the first terminal 20A and is an article that is in a finished state when the vehicle 10 returns to the departure point A1. A20, A30, A40, A50, B10, and B20 represent parts or makers that are located at each point. A20, A30, A40, and A50 are parts or makers that are necessary to produce the article A10, whereas B10 and B20 are parts or makers that are not necessary to produce the article A10. The points B1 and B2 are therefore not included in the waypoints for the vehicle 10. FIG. 2 illustrates the case where all of A20, A30, A40, and A50 are required to finish the article A10, and parts or makers are required in the order of A20, A30, A40, and A50. That is, the vehicle 10 needs to depart from the departure point A1 and travel through the waypoints A2, A3, A4, and A5 in this order.

For example, when A20 represents a part and A30 represents a maker that attaches the part A20 to an unfinished article, the second user related to the waypoint A2 loads the part A20 into the vehicle 10 at the waypoint A2, and the maker A30 attaches the part A20 to an unfinished article at the waypoint A3. For example, when A20 represents a part, A30 represents a maker that processes the part A20, and A40 represents a maker that attaches the part A20 processed by the maker A30 to an unfinished article, the second user related to the waypoint A2 loads the part A20 into the vehicle 10 at the waypoint A2, the maker A30 processes the part A20 at the waypoint A3, and the maker A40 attaches the part A20 to an unfinished article at the waypoint A4. For example, when A20 represents a tool to be used to produce an article and A30 represents a maker that processes an unfinished product using the tool A20, the second user related to the waypoint A2 loads the vehicle 10 with the tool A20 at the waypoint A2 and the maker A30 processes an unfinished product using the tool A20 at the waypoint A3.

The server 30 generates an operation command that causes vehicle 10 to travel in the order of A1, A2, A3, A4, A5, and A1. This operation command may include a travel route in which the vehicle 10 travels in the order of A1, A2, A3, A4, A5, and A1. In FIG. 2, the finished article is given to the first user when the vehicle 10 returns to the departure point A1. The delivery location of the finished article may be different from the departure point A1. In this case, the server 30 generates a travel route in which the vehicle 10 travels to the delivery location of the finished article after the waypoint A5 and then returns to the departure point A1.

### Hardware Configurations

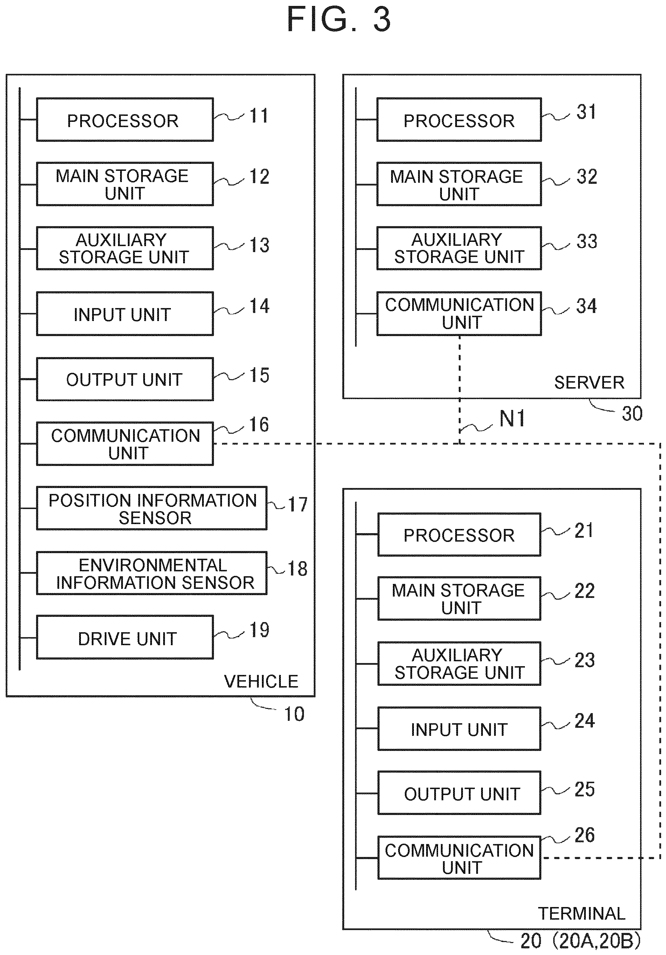

The hardware configurations of the vehicle 10, the first terminal 20A, the second terminal 20B, and the server 30 will be described with reference to FIG. 3. FIG. 3 is a block diagram schematically illustrating an example of the configurations of the vehicle 10, the first terminal 20A, the second terminal 20B, and the server 30 that constitute the autonomous driving system 1 according to the present embodiment. Each of the first terminal 20A and the second terminal 20B is simply referred to as the terminal 20 when the terminals 20A, 20B are not distinguished from each other.

The server 30 has a common computer configuration. The server 30 includes a processor 31, a main storage unit 32, an auxiliary storage unit 33, and a communication unit 34. These are connected to each other by a bus. The server 30 is an example of the information processing device.

The processor 31 is a central processing unit (CPU), a digital signal processor (DSP), etc. The processor 31 controls the server 30 and performs various information processing operations. The processor 31 is an example of the "control unit". The main storage unit 32 is a random access memory (RAM), a read only memory (ROM), etc. The auxiliary storage unit 33 is an erasable programmable ROM (EPROM), a hard disk drive (HDD), a removable medium, etc. The auxiliary storage unit 33 stores an operating system (OS), various programs, various tables, etc. The processor 31 loads the programs stored in the auxiliary storage unit 33 to a working area of the main storage unit 32 and executes the programs, and each constituent unit is controlled by execution of the programs. The server 30 thus implements a function that suits a predetermined purpose. The main storage unit 32 and the auxiliary storage unit 33 are computer-readable recording media. The server 30 may be either a single computer or a plurality of computers that cooperate with each other. Information that is stored in the auxiliary storage unit 33 may be stored in the main storage unit 32. Information that is stored in the main storage unit 32 may be stored in the auxiliary storage unit 33.

The communication unit 34 is a unit that communicates with the vehicle 10, the first terminal 20A, and the second terminal 20B via the network N1. The communication unit 34 is, for example, a local area network (LAN) interface board or a wireless communication circuit for wireless communication. The LAN interface board or the wireless communication circuit is connected to the network N1.

A series of processes that is performed by the server 30 can be performed by either hardware or software. The hardware configuration of the server 30 is not limited to that shown in FIG. 3. A part of or the entire configuration of the server 30 may be mounted on the vehicle 10.

Next, the vehicle 10 will be described. The vehicle 10 includes a processor 11, a main storage unit 12, an auxiliary storage unit 13, an input unit 14, an output unit 15, a communication unit 16, a position information sensor 17, an environmental information sensor 18, and a drive unit 19. These are connected to each other by a bus. Since the processor 11, the main storage unit 12, and the auxiliary storage unit 13 are similar to the processor 31, the main storage unit 32, and the auxiliary storage unit 33 of the server 30, description thereof will be omitted.

The input unit 14 is a unit that receives an input operation performed by the user and is, for example, a touch panel, a pushbutton, etc. The output unit 15 is a unit that provides information to the user and is, for example, a liquid crystal display (LCD), an electroluminescence (EL) panel, a speaker, a lamp, etc. The input unit 14 and the output unit 15 may be configured as a single touch panel display. The communication unit 16 is a communication unit that connects the vehicle 10 to the network N1. The communication unit 16 is, for example, a circuit that communicates with other device (e.g., the server 30 etc.) via the network N1 by using a mobile communication service (a telephone network such as 3rd generation (3G) or long term evolution (LTE) or a wireless network such as WiFi).

The position information sensor 17 obtains position information (e.g., latitude and longitude) of the vehicle 10 at predetermined intervals. The position information sensor 17 is, for example, a global positioning system (GPS) receiving unit a WiFi communication unit, etc. Information obtained by the position information sensor 17 is recorded on, for example, the auxiliary storage unit 13 etc. and sent to the server 30.

The environmental information sensor 18 is a unit that senses the state of the vehicle 10 or senses the surroundings of the vehicle 10. Examples of the sensor that senses the state of the vehicle 10 include an acceleration sensor, a speed sensor, and an azimuth sensor. Examples of the sensor that senses the surroundings of the vehicle 10 include a stereo camera, a laser scanner, a Light Detection and Ranging (LIDAR), and a radar.

The drive unit 19 causes the vehicle 10 to travel based on control commands generated by the processor 11. The drive unit 19 includes, for example, a motor and an inverter that drive wheels of the vehicle 10, a brake, a steering mechanism, etc. Autonomous driving of the vehicle 10 is implemented by driving the motor, the brake, etc. according to the control commands.

Next, the terminal 20 will be described. The terminal 20 is a small computer such as a smartphone, a mobile phone, a tablet device, a personal digital assistant (PDA), a wearable computer (such as a smartwatch), or a personal computer (PC). The terminal 20 includes a processor 21, a main storage unit 22, an auxiliary storage unit 23, an input unit 24, an output unit 25, and a communication unit 26. These are connected to each other by a bus. Since the processor 21, the main storage unit 22, the auxiliary storage unit 23, the input unit 24, the output unit 25, and the communication unit 26 are similar to the processor 11, the main storage unit 12, the auxiliary storage unit 13, the input unit 14, the output unit 15, and the communication unit 16 of the vehicle 10, description thereof will be omitted. The terminal 20 may be either a single computer or a plurality of computers that cooperate with each other. A part of or the entire configuration of the first terminal 20A may be mounted on the vehicle 10.

### Functional Configuration: Server

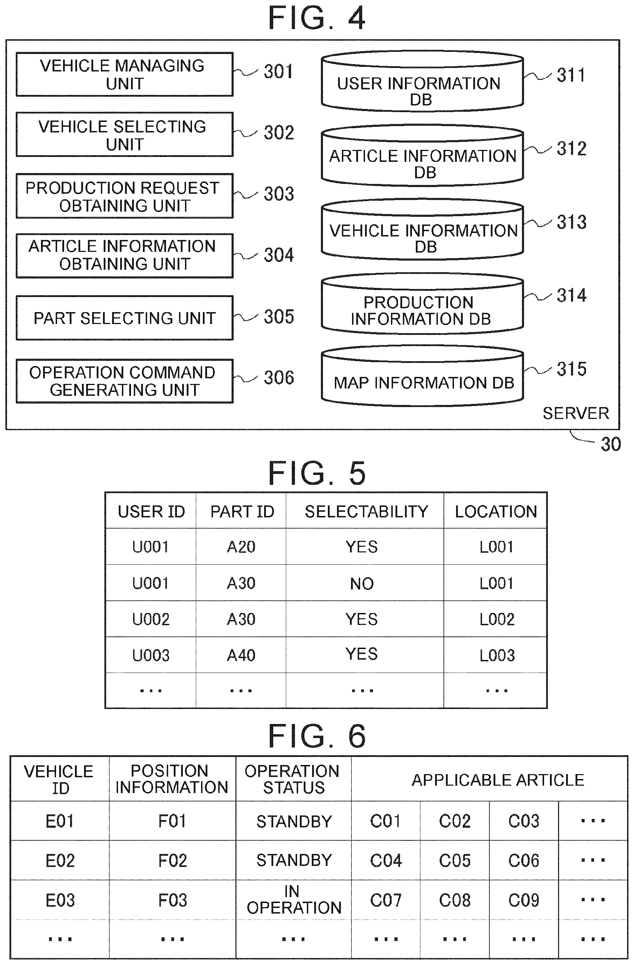

FIG. 4 is a diagram illustrating an example of the functional configuration of the server 30. The server 30 includes, as functional components, a vehicle managing unit 301, a vehicle selecting unit 302, a production request obtaining unit 303, an article information obtaining unit 304, a part selecting unit 305, an operation command generating unit 306, a user information database (DB) 311, an article information DB 312, a vehicle information DB 313, a production information DB 314, and a map information DB 315. For example, the vehicle managing unit 301, the vehicle selecting unit 302, the production request obtaining unit 303, the article information obtaining unit 304, the part selecting unit 305, and the operation command generating unit 306 are functional components that are provided by the processor 31 of the server 30 executing the various programs stored in the auxiliary storage unit 33.

For example, the user information DB 311, the article information DB 312, the vehicle information DB 313, the production information DB 314, and the map information DB 315 are relational databases that are constructed by a program of a database management system (DBMS) program that is executed by the processor 31 manages data stored in the auxiliary storage unit 33. Any of the functional components of the server 30 or a part of the processes that are performed by the functional components of the server 30 may be implemented by other computer connected to the network N1.

The vehicle managing unit 301 manages various information on the vehicle 10. For example, the vehicle managing unit 301 obtains and manages position information sent from the vehicle 10 at predetermined intervals, or the vehicle managing unit 301 obtains and manages position information sent from the vehicle 10 in response to a request from the server 30. The vehicle managing unit 301 stores the position information in the vehicle information DB 313 in association with the vehicle ID. The vehicle managing unit 301 also manages the operation status of the vehicle 10. The operation status is information for determining whether the vehicle 10 is in operation to produce an article or the vehicle 10 is in a standby state, namely the vehicle 10 is not in operation to produce an article. The vehicle managing unit 301 stores the operation status in the vehicle information DB 313 in association with the vehicle ID. For example, the operation status may be sent from the vehicle 10 at predetermined intervals, or the vehicle managing unit 301 may determine the operation status based on the position information of the vehicle 10. For example, the vehicle managing unit 301 may determine that the vehicle 10 is in a standby state when the vehicle 10 is currently located at the base for the vehicle 10, and the vehicle managing unit 301 may determine that the vehicle 10 is in operation when the vehicle 10 is currently located at a place other than the base for the vehicle 10. For example, the vehicle managing unit 301 manages information on articles that can be produced in the vehicle 10 (applicable articles). The information on applicable articles is information that is obtained in advance for each vehicle 10 via the input unit 24 of the first terminal 20A or the input unit 14 of the vehicle 10, and the vehicle managing unit 301 stores the information on applicable articles for each vehicle 10 in the vehicle information DB 313 in association with the vehicle ID.

The vehicle selecting unit 302 selects the vehicle 10 for producing an article based on, for example, predetermined conditions. The predetermined conditions herein refer to conditions under which a finished article can be produced in the vehicle 10. For example, the predetermined conditions are that the vehicle 10 is a vehicle in which an article requested by the first user can be produced, that the vehicle 10 is in a standby state, etc. That is, the vehicle selecting unit 302 selects the vehicle 10 in which an article requested by the first user can be produced and that is in a standby state as the vehicle 10 used to produce the article.

The production request obtaining unit 303 obtains, for example, a production request sent from the first terminal 20A of the first user. The production request is information for the first user to request production of an article. The production request includes information on an article requested by the first user. The production request is generated in the first terminal 20A when the first user inputs predetermined information to the input unit 24 of the first terminal 20A.

The article information obtaining unit 304 obtains, for example, information indicating whether parts or makers are selectable from the second terminal 20B of the second user, information on the locations of the parts or the makers, etc. These pieces of information (article information) may be sent from the second terminal 20B to the server 30 in response to a request from the server 30 or may be sent from the second terminal 20B to the server 30 at predetermined intervals. These pieces of information include information on a user ID associated with the second user and part IDs associated with the parts or the makers. The user ID is an identifier unique to the user. The part ID is an identifier unique to the part or the maker. In the present embodiment, an ID corresponding to the maker is also referred to as the part ID for convenience. The article information is sent from the second terminal 20B to the server 30 and registered in the server 30. When the article information obtaining unit 304 obtains the article information, the article information obtaining unit 304 stores the obtained article information in the article information DB 312 described later.

The part selecting unit 305 selects parts and makers for producing an article. The part selecting unit 305 refers to the production information DB 314 to obtain information on parts and makers that are necessary to finish the article. The part selecting unit 305 then refers to the article information DB 312 to select selectable parts and makers from the parts and the makers obtained. In the case where the same part can be supplied from a plurality of second users, one of the parts from the plurality of second users may be selected according to a predetermined rule. The predetermined rule may be determined based on, for example, information on price, quality, etc. For example, the part with the lowest price may be selected according to the predetermined rule. The information on price, quality, etc. may be obtained in advance from the second terminal 20B in association with the user ID and the part ID or may be obtained based on past data stored in the server 30. The server 30 may select parts and makers so that the travel route of vehicle 10 is the shortest. For example, in the case where there are a plurality of combinations of parts and makers, a travel route may be calculated for each combination, and parts and makers that correspond to the shortest travel route may be selected. The server 30 may select parts and makers so that the time required for producing the article is the shortest.

For example, the operation command generating unit 306 generates an operation command that causes the vehicle 10 to depart from a departure point (base) and return to the departure point (base) via waypoints, namely the locations of the parts and makers selected by the part selecting unit 305, and a point to which a finished article is delivered. This operation command is determined so that the vehicle 10 travels through the waypoints in the order in which the article is produced. The order in which the article is produced is associated with the part ID. The operation command generating unit 306 according to the present embodiment generates a travel route based on map information stored in the map information DB 315 described later. The travel route is generated according to a predetermined rule, such as a route with the shortest travel distance of the vehicle 10 or a route with the shortest travel time of the vehicle 10. The operation command generating unit 306 sends the operation command including the travel route to the vehicle 10.

The user information DB 311 is created by storing user information of the first user and user information of the second user in the auxiliary storage unit 33. In the user information DB 311, each user is associated with the user information. The user information includes, for example, the user IDs, names, addresses, etc. associated with the first user and the second user.

The article information DB 312 is created by storing the article information in the auxiliary storage unit 33. In the article information DB 312, the user ID of the second user is associated with the part ID. The configuration of the article information that is stored in the article information DB 312 will be described with reference to FIG. 5. FIG. 5 is a diagram illustrating the table configuration of the article information. An article information table has user ID fields, part ID fields, selectability fields, and location fields. Information that specifies the second user is input to the user ID field. A maker may be the second user. Information that specifies a part or a maker is input to the part ID field. A plurality of part IDs may be associated with a single user ID. Information indicating whether the part or maker associated with the part ID is selectable is input to the selectability field. For example, when the part is out of stock, "No" is input to the selectability field. "No" indicates that the part is not selectable. For example, when the part is in stock, "Yes" is input to the selectability field. "Yes" indicates that the part is selectable. Further, for example, when the maker can produce the article, "Yes" is input to the selectability field. When the maker cannot produce the article (e.g., when the maker has other request, when the maker is not available, etc.), "No" is input to the selectability field. Selectability is registered via the second terminal 20B. The location of the part or the maker is input to the location field. The location of the part or the maker is registered via the second terminal 20B as a place to which the vehicle 10 travels.

The vehicle information DB 313 is created by storing vehicle information in the auxiliary storage unit 33. In the vehicle information DB 313, the vehicle ID is associated with the vehicle information. The configuration of the vehicle information that is stored in the vehicle information DB 313 will be described with reference to FIG. 6. FIG. 6 is a diagram illustrating the table configuration of the vehicle information. A vehicle information table has vehicle ID fields, position information fields, operation status fields, and applicable article fields. Identification information that specifies the vehicle 10 is input to the vehicle ID field. Position information that is sent from the vehicle 10 is input to the position information field. The position information is information indicating the current location of the vehicle 10. Information indicating whether the vehicle 10 is in operation to produce a finished article or in a standby state is input to the operation status field. For example, the operation status may be sent from the vehicle 10. Identification information that specifies a finished article corresponding to the vehicle 10 is input to the applicable article field. That is, information on an article that can be produced by the vehicle 10 is input to the applicable article field. For example, the applicable article is sent in advance from the vehicle 10.

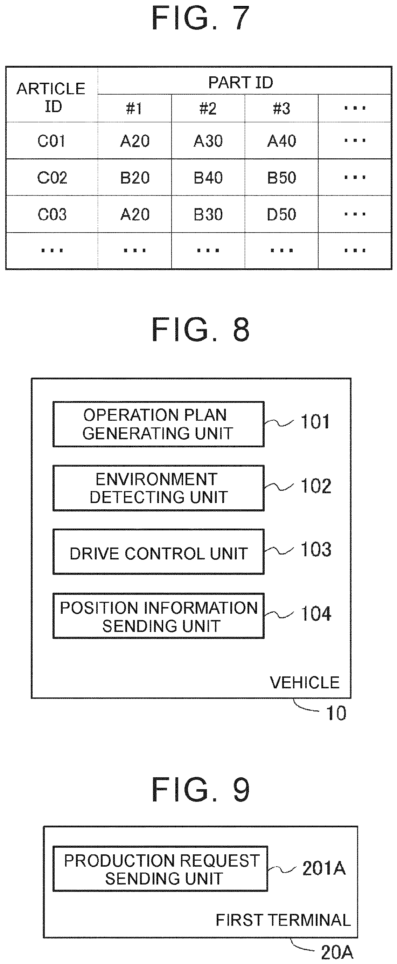

The production information DB 314 is created by storing information on parts or makers corresponding to a finished article (hereinafter sometimes simply referred to as the "production information") in the auxiliary storage unit 33. The configuration of the production information that is stored in the production information DB 314 will be described with reference to FIG. 7. FIG. 7 is a diagram illustrating the table configuration of the production information. The production information table has article ID fields and part ID field. Information that specifies a finished article is input to the article ID field. Information that specifying parts and makers necessary to produce a finished article is input to the part ID fields. The order in which the parts and the makers are required to produce a finished article are associated with the part IDs that are input to the part ID field. That is, the part ID fields are generated so that the parts or the makers are provided in the order of the part ID #1, #2, #3, ... in each field shown in FIG. 7.

The map information DB 315 stores map information including map data and point of interest (POI) information such as letters and photographs indicating characteristics of each point on the map data. The map information DB 315 may be provided by other system connected to the network N1 such as a geographic information system (GIS).

### Functional Configuration: Vehicle

FIG. 8 is a diagram illustrating an example of the functional configuration of the vehicle 10. The vehicle 10 includes, as functional components, an operation plan generating unit 101, an environment detecting unit 102, a drive control unit 103, and a position information sending unit 104. The operation plan generating unit 101, the environment detecting unit 102, the drive control unit 103, and the position information sending unit 104 are functional components that are provided by, for example, the processor 11 of the vehicle 10 executing various programs stored in the auxiliary storage unit 13.

The operation plan generating unit 101 receives an operation command from the server 30 and generates an operation plan for the vehicle 10. The operation command includes information on waypoints and a final destination of the vehicle 10. The operation plan generating unit 101 calculates a travel route of the vehicle 10 based on the operation command obtained from the server 30 and generates an operation plan that follows the travel route.

The environment detecting unit 102 detects the environment around the vehicle 10 that is necessary for autonomous driving, based on data obtained by the environmental information sensor 18. For example, the environment detecting unit 102 detects the number and positions of lanes, the number and positions of other moving bodies that are present around the vehicle 10, the number and positions of obstacles (e.g., pedestrians, bicycles, structures, buildings, etc.) that are present around the vehicle 10, road structures, road signs, etc. However, the invention is not limited to this. The environment detecting unit 102 may detect anything that is necessary for autonomous driving. For example, when the environmental information sensor 18 is a stereo camera, the environment detecting unit 102 detects objects around the vehicle 10 by processing image data captured by the environmental information sensor 18. Data about the environment around the vehicle 10 (hereinafter referred to as the environmental data) detected by the environment detecting unit 102 is sent to the drive control unit 103 described below.

The drive control unit 103 generates a control command to control autonomous driving of the vehicle 10, based on the operation plan generated by the operation plan generating unit 101, the environmental data generated by the environment detecting unit 102, and the position information of the vehicle 10 obtained by the position information sensor 17. For example, the drive control unit 103 generates a control command that causes the vehicle 10 to travel so that the vehicle 10 travels along a predetermined route and no obstacle enters a predetermined safety area centered on the vehicle 10. The generated control command is sent to the drive unit 19. A known method can be used to generate a control command to autonomously move the vehicle 10.

The position information sending unit 104 sends position information obtained from the position information sensor 17 to the server 30 via the communication unit 16. The timing at which the position information sending unit 104 sends the position information can be set as appropriate. For example, the position information sending unit 104 may periodically send the position information, may send the position information synchronously with sending some information to the server 30, or may send the position information in response to a request from the server 30. The position information sending unit 104 sends the position information together with identification information (vehicle ID) that uniquely identifies the vehicle 10 to the server 30. The vehicle ID that identifies the vehicle 10 is assigned in advance.

### Functional Configuration: First Terminal

FIG. 9 is a diagram illustrating an example of the functional configuration of the first terminal 20A. The first terminal 20A includes a production request sending unit 201A as a functional component. For example, the production request sending unit 201A is a functional component provided by the processor 21 of the first terminal 20A executing various programs stored in the auxiliary storage unit 23. For example, the production request sending unit 201A outputs an icon etc. for requesting production of an article to a touch panel display of the first terminal 20A and generates a production request when the first user clicks the icon. The production request includes information on an article requested by the first user. The production request sending unit 201A sends the generated production request in association with the user ID to the server 30.

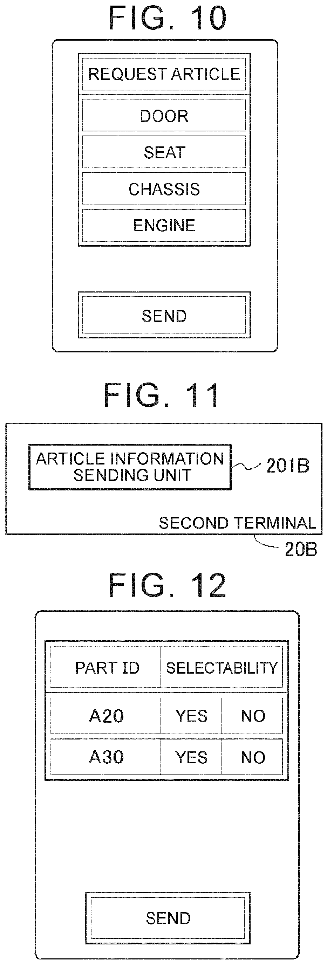

FIG. 10 is a diagram illustrating an example of a screen that is displayed on the output unit 25 of the first terminal 20A when the first user requests production of an article. When the first user clicks an article from "Request Article" and then clicks "Send", the production request sending unit 201A generates a production request and sends the production request to the server 30. In the example shown in FIG. 10, a door, a seat, a chassis, or an engine can be selected as an article.

### Functional Configuration: Second Terminal

FIG. 11 is a diagram illustrating an example of the functional configuration of the second terminal 20B. The second terminal 20B includes an article information sending unit 201B as a functional component. For example, the article information sending unit 201B is a functional component provided by the processor 21 of the second terminal 20B executing various programs stored in the auxiliary storage unit 23. For example, the article information sending unit 201B outputs an icon etc. indicating whether a part or a maker is selectable to a touch panel display of the second terminal 20B, and obtains information on whether a part or a maker is selectable when the second user clicks the icon. When a part is out of stock, the second user inputs information indicating that the part is not selectable. When a maker is not available or has other production request, the second user inputs information indicating that the maker is not selectable. The article information sending unit 201B obtains information on the location of the part or the maker via the input unit 24. The second user inputs information on the location (e.g., address) of the part or the maker via the input unit 24. The article information sending unit 201B sends the article information in association with the user ID and the part ID to the server 30. The timing at which the article information sending unit 201B sends the article information can be set as appropriate. For example, the article information sending unit 201B may send the article information when there is a change in article information, may periodically send the article information, or may send the article information in response to a request from the server 30. The article information sending unit 201B may register the information on the location of the part or the maker in the server 30 when the second user inputs this information for the first time. In this case, the article information sending unit 201B need only send the updated information on the location of the part or the maker only when there is a change in information on the location of the part or the maker.

FIG. 12 is a diagram illustrating an example of a screen that is displayed on the output unit 25 of the second terminal 20B when the second user registers whether a part or a maker is selectable. When the second user selects whether a part is selectable by clicking either "Yes" or "No" for each "part ID" and then clicks "send", the article information sending unit 201B generates article information.

### Process Flow: Server

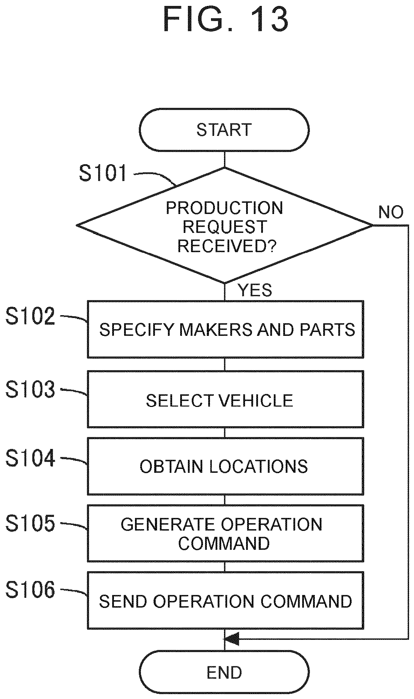

Next, a process in which the server 30 sends an operation command to the vehicle 10 will be described. FIG. 13 is an example of a flowchart of the process of sending an operation command according to the present embodiment. The processor 31 of the server 30 performs the process shown in FIG. 13 at predetermined time intervals. It is herein assumed that the server 30 has already received information necessary to construct the article information DB 312, the vehicle information DB 313, and the production information DB 314 from the vehicle 10, the first terminal 20A, and the second terminal 20B.

In step S101, the production request obtaining unit 303 determines whether it has received a production request from the first terminal 20A. When the production request obtaining unit 303 determines in step S101 that it has received a production request from the first terminal 20A (Yes in step S101), the routine proceeds to step S102. Otherwise (No in step S101), the routine is terminated.

In step S102, the part selecting unit 305 specifies parts and makers that are necessary to produce a requested article. The part selecting unit 305 obtains a combination of part IDs corresponding to the parts and makers that are necessary to produce the requested article. The part selecting unit 305 accesses the production information DB 314 and the article information DB 312 and selects a combination of part IDs of which selectability is all "Yes" from combinations of part IDs corresponding to the article ID of the requested article.

That is, the part selecting unit 305 obtains the part IDs corresponding to the article ID of the requested finished article from the production information DB 314. The part selecting unit 305 also obtains from the article information DB 312 information on whether selectability of each of the obtained part IDs is "Yes" or "No". The part selecting unit 305 then selects a combination of the part IDs of which selectability is all "Yes" from the combinations of the part IDs corresponding to the article ID of the requested article. The part selecting unit 305 thus specifies makers and parts. When there is no combination of part IDs of which selectability is all "Yes", the part selecting unit 305 may notify the first user that the article cannot be produced due to a shortage of parts or makers.

In step S103, the vehicle selecting unit 302 selects a vehicle 10 for producing the finished article. The vehicle selecting unit 302 accesses the vehicle information DB 313 and selects the vehicle 10 that corresponds to the requested article and of which operation status is "standby".

In step S104, the operation command generating unit 306 obtains locations corresponding to the makers and parts specified by the part selecting unit 305 in step S102. The operation command generating unit 306 obtains from the article information DB 312 locations corresponding to the user IDs associated with the part IDs corresponding to the makers and parts specified by the part selecting unit 305.

In step S105, the operation command generating unit 306 generates an operation command for the vehicle 10. The operation command generating unit 306 calculates a travel route of the vehicle 10 based on the location of the vehicle 10 selected in step S103 and the locations obtained in step S104 so that the vehicle 10 travels through the locations of the parts and the makers in the order in which the article is produced. The operation command generating unit 306 obtains the order in which the article is produced from the production information DB 314. The first user may designate the delivery location of the produced article via the first terminal 20A. In step S106, the operation command generating unit 306 sends an operation command including the travel route to the vehicle 10 selected in step S103. The operation command generating unit 306 may access the vehicle information DB 313 to update the operation status of the selected vehicle 10 to "in operation".

The server 30 may send information indicating a request for production of the article to the second terminals 20B of the second users corresponding to the selected part IDs. The server 30 may notify the second terminals 20B of the current location of the vehicle 10. This notification may be given in response to a request from the second user or may be given at predetermined time intervals.

### Process Flow: Vehicle

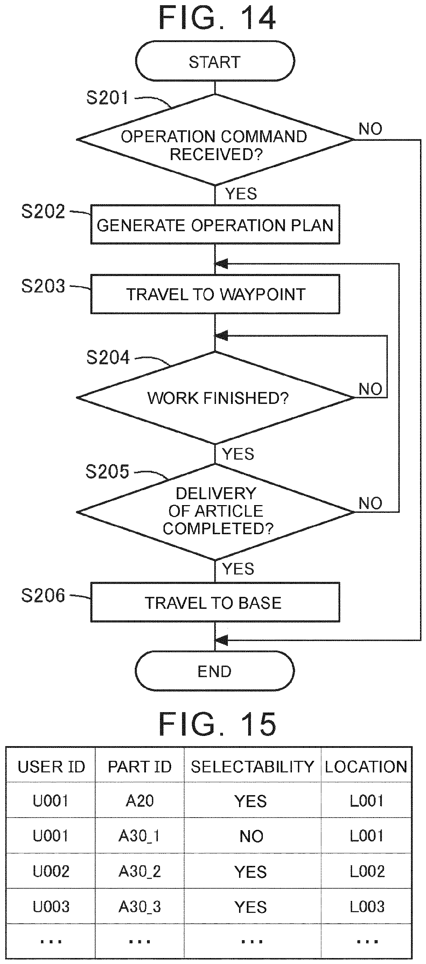

Next, a process for moving the vehicle 10 will be described. FIG. 14 is an example of a flowchart of a process of moving the vehicle 10 according to the present embodiment. The processor 11 of the vehicle 10 performs the process shown in FIG. 14 at predetermined time intervals. The process of this flowchart is performed for the vehicle 10 in a standby state.

In step S201, the operation plan generating unit 101 determines whether an operation command is received from the server 30. When the operation plan generating unit 101 determines in step S201 that an operation command is received (Yes in step S201), the routine proceeds to step S202. Otherwise (No in step S201), the routine is terminated. In step S202, the operation plan generating unit 101 generates an operation plan according to the operation command.

When generation of the operation plan is completed, the drive control unit 103 generates a control command in step S203, and the drive unit 19 is controlled according to the control command so that the vehicle 10 travels to a waypoint. The second user carries out work such as attaching a part at the waypoint. In step S204, the drive control unit 103 determines whether the work by the second user is finished. For example, when the work by the second user is finished, the second user inputs the finishing of the work to the input unit 14 of the vehicle 10. In response to the input, the drive control unit 103 determines that the work is finished. This work may include delivery work. When the drive control unit 103 determines in step S204 that the work is finished (Yes in step S204), the routine proceeds to step S205. Otherwise (No in step S204), step S204 is performed again.

In step S205, the drive control unit 103 determines whether delivery of the article is completed. The drive control unit 103 determines that delivery of the article is completed when the current location of the vehicle 10 is the last waypoint. When the drive control unit 103 determines in step S205 that delivery of the article is completed (Yes in step S205), the routine proceeds to step S206. Otherwise (No in step S205), the routine returns to step S203 to move the vehicle 10 to the next waypoint. In step S206, the drive control unit 103 moves the vehicle 10 to a base, and then the routine is terminated.

As described above, according to the present embodiment, an article can be produced using the vehicle 10 that travels autonomously. This eliminates the need to keep parts in stock in a factory. Moreover, a maker can produce an article at a place suitable for producing the article.

### Second Embodiment

In the present embodiment, when there are a plurality of combinations of parts and makers corresponding to an article, the first user selects parts and makers from the plurality of combinations. For example, when there are a plurality of parts that are the same but from different second users, the first user selects one of the plurality of parts. When there are a plurality of parts that are different but compatible, the first user selects one of the plurality of parts. When there are a plurality of makers with the same skills, the first user selects one of the plurality of makers.

FIG. 15 is a diagram illustrating the table configuration of article information in the article information DB 312. An article information table according to the present embodiment includes user ID fields, part ID fields, selectability fields, and location fields. Differences from FIG. 5 will be mainly described. In FIG. 15, information that specifies a part or a maker is input to the part ID field. A30_1, A30_2, and A30_3 represent part IDs corresponding to parts or makers that are different but interchangeable. A30_1, A30_2,and A30_3 represent part IDs that are applicable to the part or maker of which part ID is A30. The first user can select one of the parts or makers of which part IDs are A30_1, A30_2, and A30_3 when a part or maker of which part ID is A30 is necessary to produce an article. The server 30 makes an inquiry to the first user about which one of A30_1, A30_2,and A30_3 to select.

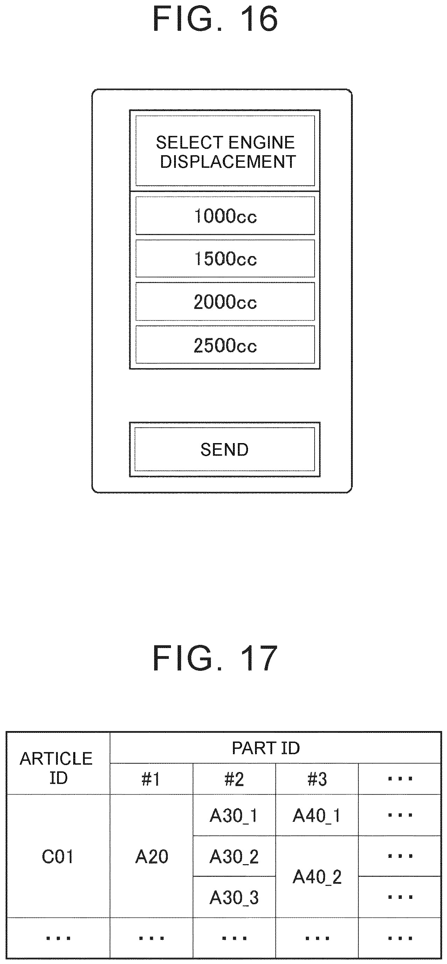

FIG. 16 is a diagram showing an example of a screen that is displayed on the output unit 25 of the first terminal 20A when the first user selects parts after the user requests production of an article. FIG. 16 shows an example in which engine displacement can be selected when the first user requests production of an engine. In the example shown in FIG. 16, the engine displacement can be selected from 1000 cc, 1500 cc, 2000 cc, and 2500 cc. This screen is displayed based on information that is sent from the server 30. When the first user clicks the displacement of the requested engine and then clicks "Send", the production request sending unit 201A sends information on the selected displacement to the server 30.

FIG. 17 is a diagram illustrating the table configuration of production information in the production information DB 314. A production information table has article ID fields and part ID fields. Differences from FIG. 7 will be mainly described. When producing an article of which article ID is C01, a part or maker of which part ID is A20 is required for the first part or maker (#1) in the order of production, a part or maker of which part ID is A30 is required for the second part or maker (#2) in the order of production, and a part or maker of which part ID is A40 is required for the third part or maker (#3) in the order of production. The parts or makers of which part IDs are A30_1, A30_2, and A30_3 are applicable to the part or maker of which part ID is A30, and the parts or makers of which part IDs are A40_1 and A40_2 are applicable to the part or maker of which part ID is A40. However, there may be restrictions on the combination of parts or makers. For example, when the first user selects A30_1, the first user cannot select A40_2. When the first user selects A30_2 or A30_3, the first user cannot select A40_1. That is, in the example shown in FIG. 17, when requesting production of the article of which article ID is "C01", the first user selects one of the following three combinations, the combination of part IDs A20, A30_1, A40_1, ..., the combination of part IDs A20, A30_2, A40_2, ..., and the combination of part IDs A20, A30_3, A40_2, ....

### Process Flow: Server

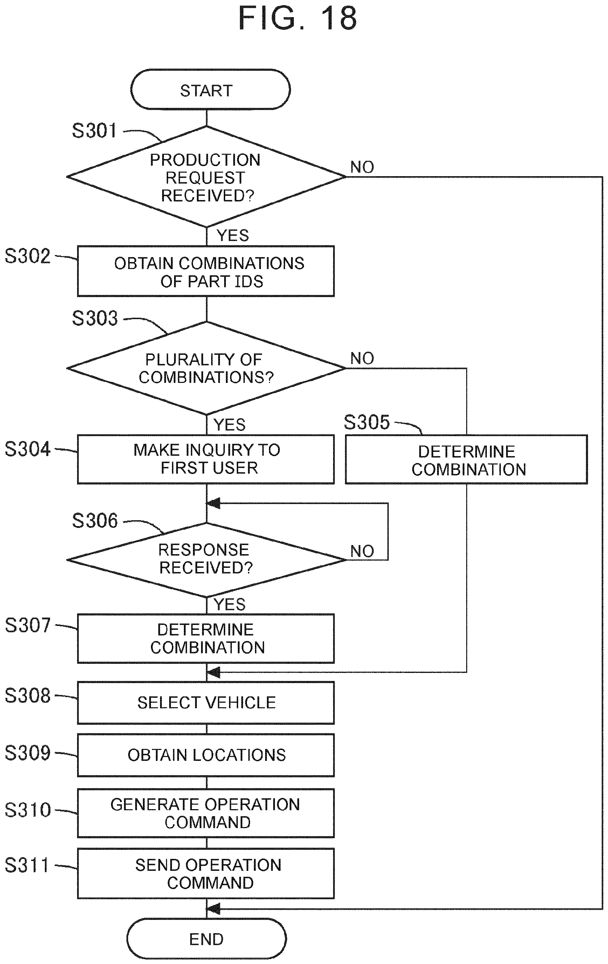

Next, a process in which the server 30 sends an operation command to the vehicle 10 will be described. FIG. 18 is an example of a flowchart of a process of sending an operation command according to the present embodiment. The processor 31 of the server 30 performs the process shown in FIG. 18 at predetermined time intervals. It is herein assumed that the server 30 has already received information necessary to construct the article information DB 312, the vehicle information DB 313, and the production information DB 314 from the vehicle 10, the first terminal 20A, and the second terminal 20B.

In step S301, the production request obtaining unit 303 determines whether a production request is received from the first terminal 20A. When the production request obtaining unit 303 determines in step S301 that a production request is received from the first terminal 20A (Yes in step S301), the routine proceeds to step S302. Otherwise (No in step S301), the routine is terminated.

In step S302, the part selecting unit 305 obtains all the combinations of part IDs corresponding to parts and makers that are necessary to produce a requested article. The part selecting unit 305 accesses the production information DB 314 and the article information DB 312 and obtains all the combinations of part IDs of which selectability is all "Yes" from the combinations of part IDs corresponding to the article ID of the requested article. When there is no combination of part IDs of which selectability is all "Yes", the part selecting unit 305 may notify the first user that the article cannot be produced due to a shortage of parts or makers.

In step S303, the part selecting unit 305 determines whether a plurality of combinations are obtained in step S302. When the part selecting unit 305 determines in step S303 that a plurality of combinations are obtained in step S302 (Yes in step S303), the routine proceeds to step S304. Otherwise (No in step S303), the routine proceeds to step S305. In step S305, since there is only one combination of part IDs, the part selecting unit 305 determines that the article is to be produced using this combination of part IDs. That is, the part selecting unit 305 specifies makers and parts.

In step S304, the part selecting unit 305 sends a request to select one of the plurality of combinations of part IDs (a selection request) to the first terminal 20A. That is, the part selecting unit 305 makes an inquiry to the first user about which combination to select. The part selecting unit 305 generates this selection request and sends the request to the first terminal 20A. The selection request includes information for displaying a screen prompting the first user to select parts or makers on the first terminal 20A.

In step S306, the part selecting unit 305 determines whether a response to the selection request is received from the first terminal 20A. When the part selecting unit 305 determines in step S306 that a response to the selection request is received from the first terminal 20A (Yes in S306), the routine proceeds to step S307. Otherwise (No in step S306), step S306 is performed again.

In step S307, the part selecting unit 305 determines that the article is to be produced using the combination of part IDs according to the response from the first terminal 20A. That is, the part selecting unit 305 specifies makers and parts. In step S308, a vehicle 10 for producing the article is selected. The vehicle selecting unit 302 accesses the vehicle information DB 313 and selects the vehicle 10 that corresponds to the combination of part IDs determined in step S305 or step S307 and of which operation status is "standby".

Since steps S309 to S311 are the same as steps S104 to S106 described above, description thereof will be omitted. The flowchart shown in FIG. 14 can be applied to the process for moving the vehicle 10 according to the present embodiment.

As described above, according to the present embodiment, an article can be produced using the vehicle 10 that travels autonomously. This eliminates the need to keep parts in stock in a factory. Moreover, a maker can produce an article at a place suitable for producing the article. Since the first user can be involved in selection of parts or makers for production of an article, the article can be produced according to the needs of the first user.

### Third Embodiment

The server 30 can also select the first user as one of the makers of an article. The server 30 can also select a part provided by the first user as one of the parts for the article. Accordingly, the first terminal 20A is designed so that the first user can input to the first terminal 20A the process in which the first user is to be involved. When the first user inputs to the first terminal 20A the process in which the first user is to be involved, the server 30 selects the first user as a maker in this process or selects a part provided by the first user as a part to be used in this process. For example, when the production request sending unit 201A of the first terminal 20A generates a production request, the production request is generated to include information on the process in which the first user is to be involved. The first user can input to the first terminal 20A the process in which the first user is to be involved. The first user can be involved in a part of the processes but will not be involved in all of the processes. For example, the processes correspond to the order (#1, #2, #3, ...) described with respect to FIG. 7. The process in which the first user can be involved may be determined for each article.

For example, the production request sending unit 201A outputs an icon etc. for requesting production of an article to the touch panel display of the first terminal 20A, and after the first user clicks the icon, the production request sending unit 201A further outputs an icon etc. for selecting the process in which the first user is to be involved. When the first user clicks the icon, the production request sending unit 201A generates a production request. The production request includes information on an article requested by the first user and information on the process in which the first user desires to be involved in (hereinafter sometimes referred to as the involvement desired process). The production request sending unit 201A sends the generated production request in association with the user ID to the server 30.

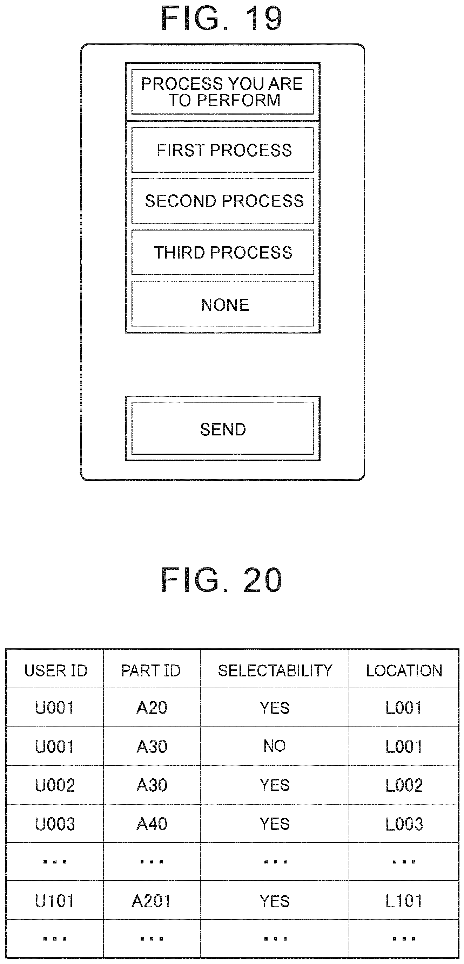

FIG. 19 is a diagram showing an example of a screen that is displayed on the output unit 25 of the first terminal 20A when the first user requests production of an article. The screen shown in FIG. 19 is displayed after the first user completes inputting on the screen for requesting production of an article (see FIG. 10). The first user clicks a process the first user desires to perform from "Process you are to perform". In the example shown in FIG. 19, the first user can select one of the first, second, and third processes. When the first user does not desire to be involved in production of the article, the first user clicks "None". When the first user then clicks "Send", the production request sending unit 201A generates a production request and sends the production request to the server 30.

The part selecting unit 305 of the server 30 having received the production request obtains a combination of part IDs form the production information DB 314. The part selecting unit 305 then changes the part ID related to the involvement desired process out of the part IDs obtained from the production information DB 314 to the part ID corresponding to the first user. The part ID corresponding to the first user is provided by the article information obtaining unit 304.

For example, when the production request includes information on the involvement desired process, the article information obtaining unit 304 stores the part ID corresponding to the first user, information on the location of the first user, etc. in the article information DB 312. FIG. 20 is a diagram illustrating the table configuration of article information. Differences from FIG. 5 will be mainly described. Although the user ID in FIG. 5 corresponds only to the second user, the user ID in FIG. 20 corresponds also to the first user. For example, the user ID "U101" is a user ID corresponding to the first user who desires to be involved in production. Information that specifies the part ID corresponding to the first user ("A201" in FIG. 20) is input to the part ID field in this record. "Yes" is input to the selectability field in this record. The location of the first user ("L101" in FIG. 20) is input to the location field in this record.

An example will be described in which the first user requests production of the article of which article ID is C01 in FIG. 7 and desires to be involved in the first process (#1). When the production request obtaining unit 303 receives a production request from the first terminal 20A, this production request includes information on the article ID "C01" and information on the involvement desired process "#1". The part selecting unit 305 obtains combinations of part IDs corresponding to parts and makers that are necessary to produce the requested article from the production information DB 314 and selects one of the obtained combinations In this case, in the example shown in FIG. 7, the part selecting unit 305 selects the combination of A20, A30, A40, .... Since the first user desires to be involved in the process "#1", the part selecting unit 305 changes the part ID corresponding to the process "#1" from "A20" to "A201" that is the part ID corresponding to the first user. The operation command generating unit 306 obtains the locations corresponding to the user IDs associated with the part IDs from the article information DB 312 and generates an operation command. The vehicle 10 thus travels through the location of the first user.

### Process Flow: Server

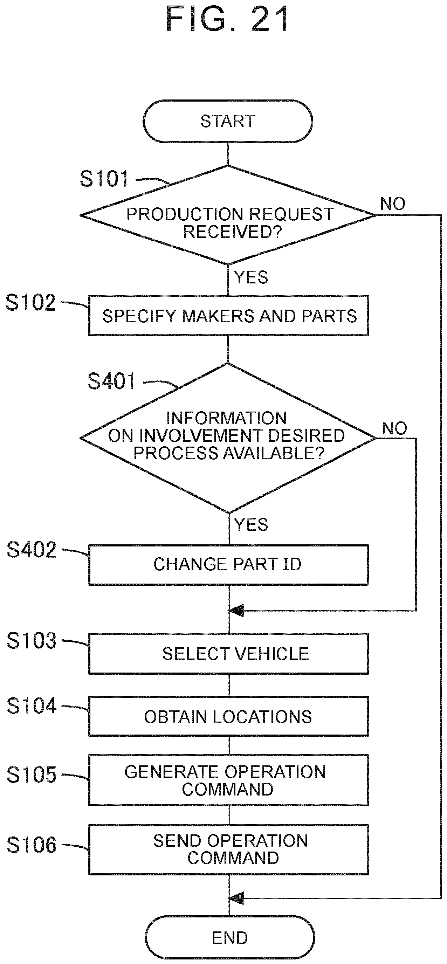

Next, a process in which the server 30 sends an operation command to the vehicle 10 will be described. FIG. 21 is an example of a flowchart of the process of sending an operation command according to the present embodiment. The processor 31 of the server 30 performs the process shown in FIG. 21 at predetermined time intervals. The same steps as those in the flowchart shown in FIG. 13 are denoted with the same reference characters and description thereof will be omitted.

In the flowchart shown in FIG. 21, the routine proceeds to step S401 when step S102 is finished. In step S401, the part selecting unit 305 determines whether the production request includes information on the involvement desired process. When the part selecting unit 305 determines in step S401 that the production request includes information on the involvement desired process (Yes in step S401), the routine proceeds to step S402. Otherwise (No in step S401), the routine proceeds to step S103.

In step S402, the part selecting unit 305 changes the part ID related to the involvement desired process among the part IDs obtained from the production information DB 314 to the part ID corresponding to the first user. In the subsequent step S104, even when the part IDs include the part ID corresponding to the first user, the operation command generating unit 306 obtains the locations corresponding to the user IDs associated with the part IDs from the article information DB 312. In step S105, the operation command generating unit 306 generates an operation command. An operation command including the location of the first user as a waypoint is thus generated. Accordingly, the vehicle 10 travels through the location of the first user, so that the first user can produce an article or provide a part.

Since the first user is thus also involved in production of the article, the first user can enjoy producing the article. For example, in the case where the first user can produce a part but it is difficult for the first user to attach the part to an unfinished article, the first user can request a skilled worker etc. to attach the part to the unfinished article.

### Other Embodiments

The above embodiments are merely illustrative, and the invention can be modified as appropriate without departing from the scope of the claims.

Producing an article can include retrofitting, modifying, repairing, and decorating the article owned by the first user.

The process described as being performed by a single device may be performed by a plurality of devices. The processes described as being performed by different devices may be performed by a single device. The hardware configuration (server configuration) that implements each function in a computer system can be flexibly changed. In the above embodiments, the server 30 is described as an example of the information processing device. However, the invention, which is defined by the claims, is not limited to this. A terminal mounted on the vehicle 10 may function as the information processing device, or the first terminal 20A may function as the information processing device. Alternatively, the server 30 and the terminal mounted on the vehicle 10 or the first terminal 20A may function as the information processing device. For example, in the above embodiments, the server 30 includes, as functional components, the vehicle managing unit 301, the vehicle selecting unit 302, the production request obtaining unit 303, the article information obtaining unit 304, the part selecting unit 305, the operation command generating unit 306, the user information DB 311, the article information DB 312, the vehicle information DB 313, the production information DB 314, and the map information DB 315. However, the vehicle 10 may include a part or all of these functional components. The first terminal 20A may be the terminal mounted on the vehicle 10.

The invention can also be implemented by providing commands to perform the functions described in the above embodiments to a computer and reading and executing the commands by one or more processors of the computer. Such commands may be stored in a non-transitory computer readable storage medium that can be connected to a system bus of the computer and be provided to the computer, or may be provided to the computer via a network. Examples of the non-transitory computer readable storage medium include any types of disks or discs such as magnetic disks (floppy (registered trademark) disks, hard disk drives (HDDs), etc.) and optical discs (CD-ROMs, DVDs, Blu-ray discs, etc.), read-only memories (ROMs), random access memories (RAMs), erasable programmable read-only memories (EPROMs), electrically erasable programmable read-only memories (EEPROMs), magnetic cards, flash memories, optical cards, and any types of media suitable for storing electronic commands.

## Claims

1. An information processing device (30) used to produce an article using an autonomous moving body and configured to control the that moving body (10) to autonomously travel based on an operation command, the information processing device comprising:
a control unit (31) configured to perform functions including:
receiving a request for production of an article from a user,
specifying a maker of the article that corresponds to the received request,
specifying an item to be used to produce the article that corresponds to the received request,
obtaining information on a location of the specified maker and information on a location of the specified item, and
generating an operation command for the moving body (10) to cause the moving body (10) to travel through the location of the maker and the location of the item based on the obtained information on the location of the maker and the obtained information on the location of the item;
wherein the control unit (31) is configured to perform functions including specifying parts that constitute the article as the item to be used to produce the article;
wherein the moving body is a vehicle;
**characterised in that**
the maker of the article is a person or machine that rides in the moving body and moves with the moving body and
**in that** the information processing device (30) is configured such that the article is produced while the vehicle is travelling to a next waypoint.

2. The information processing device (30) according to claim 1, wherein the control unit (31) is configured to perform functions including:
obtaining information on the maker and information on the item, and
specifying the maker and the item based on the obtained information on the maker and the obtained information on the item.

3. The information processing device (30) according to claim 1 or 2, wherein the control unit (31) is configured to perform functions including specifying a tool to be used to produce the article as the item to be used to produce the article.

4. The information processing device (30) according to any one of claims 1 to 3, wherein the control unit (31) is configured to perform functions including generating the operation command to cause the moving body (10) to travel through the location of the maker and the location of the item, in an order in which the article is produced.

5. The information processing device (30) according to any one of claims 1 to 4, wherein the control unit (31) is configured to perform functions including selecting the user as the maker based on the request received from the user, or selecting an item provided by the user as the item to be used to produce the article based on the request received from the user.

6. The information processing device (30) according to any one of claims 1 to 4, wherein the control unit (31) is configured so that, when there is no combination of the maker and the item corresponding to the article for specifying the maker and the item, the control unit (31) notifies the user that the article is not producible.

7. An information processing method used to produce an article using an autonomous moving body and for controlling the moving body that autonomously travels based on an operation command, the information processing method comprising:
receiving a request for production of an article from a user;
specifying a maker of the article that corresponds to the received request;
specifying an item to be used to produce the article that corresponds to the received request;
obtaining information on a location of the specified maker and information on a location of the specified item; and
generating an operation command for the moving body (10) to cause the moving body (10) to travel through the location of the maker and the location of the item based on the obtained information on the location of the maker and the obtained information on the location of the item;
wherein parts that constitute the article are specified as the item to be used to produce the article;
wherein the moving body is a vehicle;
**characterised in that**
the maker of the article is a person or machine that rides in the moving body and moves with the moving body and
the article is produced while the vehicle is travelling to a next waypoint.

8. The information processing method according to claim 7, wherein:
information on the maker and information on the item are obtained; and
the maker and the item are specified based on the obtained information on the maker and the obtained information on the item.

9. The information processing method according to claim 7 or 8, wherein a tool to be used to produce the article is specified as the item to be used to produce the article.

10. The information processing method according to any one of claims 7 to 9,
wherein the operation command is generated to cause the moving body (10) to travel through the location of the maker and the location of the item in an order in which the article is produced.

11. The information processing method according to any one of claims 7 to 10, wherein, when there are a plurality of combinations of the maker and the item corresponding to the article for specifying the maker and the item, the user is inquired for which combination to select, and the maker and the item are specified based on the combination selected by the user.

12. The information processing method according to any one of claims 7 to 11, wherein the method further comprises selecting the user as the maker or selecting an item provided by the user as the item to be used to produce the article based on the request received from the user.

13. The information processing method according to any one of claims 7 to 10, further comprising notifying the user that the article is not producible when there is no combination of the maker and the item corresponding to the article for specifying the maker and the item.

14. A non-transitory storage medium used to produce an article using an autonomous moving body and storing instructions that are executable by one or more processors and that causes the one or more processors to perform functions, the functions comprising:
receiving a request for production of an article from a user;
specifying a maker of the article that corresponds to the received request;
specifying an item to be used to produce the article that corresponds to the received request;
obtaining information on a location of the specified maker and information on a location of the specified item;
generating an operation command for a moving body (10) autonomously travelling to cause the moving body (10) to travel through the location of the maker and the location of the item based on the obtained information on the location of the maker and the obtained information on the location of the item; and
specifying parts that constitute the article as the item to be used to produce the article;
wherein the moving body is a vehicle;
**characterised in that**
the maker of the article is a person or machine that rides in the moving body and moves with the moving body and
the article is produced while the vehicle is travelling to a next waypoint.

## Patentansprüche

1. Informationsverarbeitungsvorrichtung (30), die verwendet wird, um einen Artikel unter Verwendung eines autonomen sich bewegenden Körpers zu produzieren, und dazu konfiguriert ist, um den sich bewegenden Körper (10) zu steuern, um sich auf Grundlage eines Betriebsbefehls autonom zu bewegen, wobei die Informationsverarbeitungsvorrichtung umfasst:
eine Steuereinheit (31), die dazu konfiguriert ist, Funktionen durchzuführen, die beinhalten:
Empfangen einer Anforderung für die Produktion eines Artikels von einem Benutzer,
Spezifizieren eines Herstellers des Artikels, der der empfangenen Anforderung entspricht,
Spezifizieren eines Gegenstands, der für die Produktion des Artikels verwendet werden soll, der der empfangenen Anforderung entspricht,
Erhalten von Informationen über einen Ort des spezifizierten Herstellers und Informationen über einen Ort des spezifizierten Gegenstandes, und
Erzeugen eines Betriebsbefehls für den beweglichen Körper (10), um zu bewirken, dass der bewegliche Körper (10) auf Grundlage der erhaltenen Informationen über den Ort des Herstellers und der erhaltenen Informationen über den Ort des Gegenstands durch den Ort des Herstellers und den Ort des Gegenstands fährt;
wobei die Steuereinheit (31) dazu konfiguriert ist, Funktionen durchzuführen, die das Spezifizieren von Teilen, die den Artikel bilden, als den Gegenstand beinhalten, der für die Produktion des Artikels verwendet werden soll;
wobei der bewegliche Körper ein Fahrzeug ist;
**dadurch gekennzeichnet, dass**
der Hersteller des Artikels eine Person oder eine Maschine ist, die in dem sich bewegenden Körper mitfährt und sich mit dem beweglichen Körper bewegt, und
dass die Informationsverarbeitungsvorrichtung (30) derart konfiguriert ist, dass der Gegenstand produziert wird, während das Fahrzeug zu einem nächsten Wegpunkt fährt.

2. Informationsverarbeitungsvorrichtung (30) nach Anspruch 1, wobei
die Steuereinheit (31) dazu konfiguriert ist, Funktionen durchzuführen, die beinhalten:
Erhalten von Informationen über den Hersteller und Informationen über den Gegenstand, und
Spezifizieren des Herstellers und des Gegenstands auf Grundlage der erhaltenen Informationen über den Hersteller und der erhaltenen Informationen über den Gegenstand.

3. Informationsverarbeitungsvorrichtung (30) nach Anspruch 1 oder 2, wobei die Steuereinheit (31) dazu konfiguriert ist, Funktionen durchzuführen, die das Spezifizieren eines Werkzeugs beinhalten, das zum Produzieren des Artikels verwendet werden soll, wie den für die Herstellung des Artikels zu verwendenden Gegenstand.

4. Informationsverarbeitungsvorrichtung (30) nach einem der Ansprüche 1 bis 3, wobei die Steuereinheit (31) dazu konfiguriert ist, Funktionen durchzuführen, die das Erzeugen des Betriebsbefehls beinhalten, um den beweglichen Körper (10) zu veranlassen, den Ort des Herstellers und den Ort des Gegenstands in einer Reihenfolge zu durchfahren, in der der Artikel produziert wird.

5. Informationsverarbeitungsvorrichtung (30) nach einem der Ansprüche 1 bis 4, wobei die Steuereinheit (31) dazu konfiguriert ist, Funktionen durchzuführen, die das Auswählen des Benutzers als den Hersteller auf Grundlage der von dem Benutzer empfangenen Anforderung oder das Auswählen eines von dem Benutzer bereitgestellten Gegenstands als den für die Produktion des Artikels zu verwendenden Gegenstand auf Grundlage der von dem Benutzer empfangenen Anforderung beinhalten.

6. Informationsverarbeitungsvorrichtung (30) nach einem der Ansprüche 1 bis 4, wobei die Steuereinheit (31) derart konfiguriert ist, dass, wenn es keine Kombination aus dem Hersteller und dem Gegenstand, der dem Artikel entspricht, zum Spezifizieren des Herstellers und des Gegenstands gibt, die Steuereinheit (31) dem Benutzer mitteilt, dass der Artikel nicht produziert werden kann.

7. Informationsverarbeitungsverfahren, das für die Produktion eines Artikels durch Verwenden eines autonomen beweglichen Körpers und durch Steuern des beweglichen Körpers verwendet wird, der auf Grundlage eines Betriebsbefehls autonom fährt, wobei das Informationsverarbeitungsverfahren beinhaltet:
Empfangen einer Anforderung für die Produktion eines Artikels von einem Benutzer;
Spezifizieren eines Herstellers des Artikels, der der empfangenen Anforderung entspricht;
Spezifizieren eines Gegenstands, der für die Produktion des Artikels verwendet werden soll, der der empfangenen Anforderung entspricht;
Erhalten von Informationen über einen Ort des spezifizierten Herstellers und Informationen über einen Ort des spezifizierten Gegenstandes, und
Erzeugen eines Betriebsbefehls für den beweglichen Körper (10), um zu bewirken, dass der bewegliche Körper (10) auf Grundlage der erhaltenen Informationen über den Ort des Herstellers und der erhaltenen Informationen über den Ort des Gegenstands durch den Ort des Herstellers und den Ort des Gegenstands fährt;
wobei Teile, die den Artikel bilden, als der Gegenstand spezifiziert werden, der zum Produzieren des Artikels verwendet werden soll;
wobei der sich bewegende Körper ein Fahrzeug ist;
**dadurch gekennzeichnet, dass**
der Hersteller des Artikels eine Person oder eine Maschine ist, die in dem sich bewegenden Körper mitfährt und sich mit dem beweglichen Körper bewegt, und
der Gegenstand produziert wird, während das Fahrzeug zu einem nächsten Wegpunkt fährt.

8. Informationsverarbeitungsverfahren nach Anspruch 7, wobei:
Informationen über den Hersteller und Informationen über den Gegenstand erhalten werden; und
der Hersteller und der Gegenstand auf Grundlage der erhaltenen Informationen über den Hersteller und der erhaltenen Informationen über den Gegenstand spezifiziert werden.

9. Informationsverarbeitungsverfahren nach Anspruch 7 oder 8, wobei ein Werkzeug, das zum Produzieren des Artikels verwendet werden soll, als der für die Herstellung des Artikels zu verwendenden Gegenstand spezifiziert wird.

10. Informationsverarbeitungsverfahren nach einem der Ansprüche 7 bis 9, wobei der Betriebsbefehl erzeugt wird, um den beweglichen Körper (10) zu veranlassen, den Ort des Herstellers und den Ort des Gegenstands in einer Reihenfolge zu durchfahren, in der der Artikel produziert wird.

11. Informationsverarbeitungsverfahren nach einem der Ansprüche 7 bis 10, wobei, wenn es eine Mehrzahl an Kombinationen des Herstellers und des Gegenstands, der dem Artikel entsprechen, zum Spezifizieren des Herstellers und des Gegenstands gibt, der Benutzer gefragt wird, welche Kombination auszuwählen ist, und der Hersteller und der Gegenstand auf Grundlage der durch den Benutzer ausgewählten Kombination spezifiziert werden.

12. Informationsverarbeitungsverfahren nach einem der Ansprüche 7 bis 11, wobei das Verfahren ferner das Auswählen des Benutzers als den Hersteller oder das Auswählen eines Gegenstands, der durch den Benutzer bereitgestellt wird, als den Gegenstand umfasst, der zum Produzieren des Artikels auf Grundlage der von dem Benutzer empfangenen Auswahl verwendet werden soll.

13. Informationsverarbeitungsverfahren nach einem der Ansprüche 7 bis 10, ferner umfassend das Benachrichtigen des Benutzers, dass der Artikel nicht produziert werden kann, wenn es keine Kombination des Herstellers und des Gegenstands, die dem Artikel entsprechen, zum Spezifizieren des Herstellers und des Gegenstands gibt.

14. Nichtflüchtiges Speichermedium, das zum Produzieren eines Artikels durch Verwenden eines autonomen sich bewegenden Körpers und Speichern von Anweisungen verwendet wird, die durch einen oder mehrere Prozessoren ausführbar sind und dass bewirkt, dass der eine oder die mehreren Prozessoren Funktionen durchführen, wobei die Funktionen umfassen:
Empfangen einer Anforderung für die Produktion eines Artikels von einem Benutzer;
Spezifizieren eines Herstellers des Artikels, der der empfangenen Anforderung entspricht;
Spezifizieren eines Gegenstands, der für die Produktion des Artikels verwendet werden soll, der der empfangenen Anforderung entspricht;
Erhalten von Informationen über einen Ort des spezifizierten Herstellers und Informationen über einen Ort des spezifizierten Gegenstandes;
Erzeugen eines Betriebsbefehls für den beweglichen Körper (10), der autonom fährt, um zu bewirken, dass der bewegliche Körper (10) auf Grundlage der erhaltenen Informationen über den Ort des Herstellers und der erhaltenen Informationen über den Ort des Gegenstands durch den Ort des Herstellers und den Ort des Gegenstands fährt; und
Spezifizieren der Teile, die den Artikel bilden, als den Gegenstand, der zum Produzieren des Gegenstands zu verwenden ist;
wobei der bewegliche Körper ein Fahrzeug ist;
**dadurch gekennzeichnet, dass**
der Hersteller des Gegenstands eine Person oder eine Maschine ist, die in dem beweglichen Körper mitfährt und sich mit dem beweglichen Körper bewegt und
der Gegenstand produziert wird, während das Fahrzeug zu einem nächsten Wegpunkt fährt.

## Revendications

1. Dispositif de traitement d'informations (30) servant à produire un article à l'aide d'un corps mobile autonome et conçu pour commander le corps mobile (10) afin qu'il se déplace de manière autonome en fonction d'une commande de manoeuvre, le dispositif de traitement d'informations comprenant :
une unité de commande (31) conçue pour réaliser des fonctions comprenant :
la réception d'une demande de production d'article en provenance d'un utilisateur,
la définition d'un fabricant de l'article qui correspond à la demande reçue,
la définition d'un matériel à utiliser pour produire l'article qui correspond à la demande reçue,
l'obtention d'informations sur le site du fabricant défini et d'informations sur le site du matériel défini, et
la génération d'une commande de manoeuvre destinée au corps mobile (10) afin que le corps mobile (10) se déplace à travers le site du fabricant et le site du matériel en fonction des informations sur le site du fabricant obtenues et des informations sur le site du matériel obtenues ;
ladite unité de commande (31) étant conçue pour réaliser des fonctions comprenant la définition de pièces qui constituent l'article en tant que ledit matériel à utiliser pour produire l'article ;
ledit corps mobile étant un véhicule ;
**caractérisé en ce que**
le fabricant de l'article est une personne ou une machine qui monte dans le corps mobile et se déplace avec le corps mobile et
**en ce que** le dispositif de traitement d'informations (30) est conçu de manière que l'article soit produit pendant que le véhicule se déplace vers un prochain point de passage.

2. Dispositif de traitement d'informations (30) selon la revendication 1, dans lequel
l'unité de commande (31) est conçue pour réaliser des fonctions comprenant :
l'obtention d'informations sur le fabricant et d'informations sur le matériel, et
la définition du fabricant et du matériel en fonction des informations sur le fabricant obtenues et des informations sur le matériel obtenues.

3. Dispositif de traitement d'informations (30) selon la revendication 1 ou 2, dans lequel l'unité de commande (31) est conçue pour réaliser des fonctions comprenant la définition d'un outil à utiliser pour produire l'article en tant que matériel à utiliser pour produire l'article.

4. Dispositif de traitement d'informations (30) selon l'une quelconque des revendications 1 à 3, dans lequel l'unité de commande (31) est conçue pour réaliser des fonctions comprenant la génération de la commande de manoeuvre pour amener le corps mobile (10) à se déplacer à travers le site du fabricant et le site du matériel dans l'ordre dans lequel l'article est produit.

5. Dispositif de traitement d'informations (30) selon l'une quelconque des revendications 1 à 4, dans lequel l'unité de commande (31) est conçue pour réaliser des fonctions comprenant la sélection de l'utilisateur en tant que fabricant en fonction de la demande reçue en provenance de l'utilisateur, ou la sélection d'un matériel fourni par l'utilisateur en tant que matériel à utiliser pour produire l'article en fonction de la demande reçue en provenance de l'utilisateur.

6. Dispositif de traitement d'informations (30) selon l'une quelconque des revendications 1 à 4, dans lequel l'unité de commande (31) est conçue de façon que, en l'absence de combinaison du fabricant et du matériel correspondant à l'article pour définir le fabricant et le matériel, l'unité de commande (31) avertit l'utilisateur que l'article n'est pas productible.

7. Procédé de traitement d'informations servant à produire un article à l'aide d'un corps mobile autonome et permettant de commander le corps mobile qui se déplace de manière autonome en fonction d'une commande de manoeuvre, le procédé de traitement d'informations comprenant :
la réception d'une demande de production d'article en provenance d'un utilisateur,
la définition d'un fabricant de l'article qui correspond à la demande reçue,
la définition d'un matériel à utiliser pour produire l'article qui correspond à la demande reçue,
l'obtention d'informations sur le site du fabricant défini et d'informations sur le site du matériel défini, et
la génération d'une commande de manoeuvre destinée au corps mobile (10) afin que le corps mobile (10) se déplace à travers le site du fabricant et le site du matériel en fonction des informations sur le site du fabricant obtenues et des informations sur le site du matériel obtenues ;
des pièces qui constituent l'article étant définies en tant que matériel à utiliser pour produire l'article ;
ledit corps mobile étant un véhicule ;
**caractérisé en ce que**
le fabricant de l'article est une personne ou une machine qui monte dans le corps mobile et se déplace avec le corps mobile et
**en ce que** l'article est produit pendant que le véhicule se déplace vers un prochain point de passage.

8. Procédé de traitement d'informations selon la revendication 7, dans lequel :
des informations sur le fabricant et des informations sur le matériel sont obtenues ; et
le fabricant et le matériel sont définis en fonction des informations sur le fabricant obtenues et des informations sur le matériel obtenues.

9. Procédé de traitement d'informations selon la revendication 7 ou 8, dans lequel un outil à utiliser pour produire l'article est défini en tant que matériel à utiliser pour produire l'article.

10. Procédé de traitement d'informations selon l'une quelconque des revendications 7 à 9, dans lequel la commande de manoeuvre est générée pour amener le corps mobile (10) à se déplacer à travers le site du fabricant et le site du matériel dans l'ordre dans lequel l'article est produit.

11. Procédé de traitement d'informations selon l'une quelconque des revendications 7 à 10, dans lequel, lorsqu'il existe une pluralité de combinaisons du fabricant et du matériel correspondant à l'article pour définir le fabricant et le matériel, l'utilisateur est sollicité concernant celle des combinaisons à choisir, et le fabricant et le matériel sont définis en fonction de la combinaison sélectionnée par l'utilisateur.

12. Procédé de traitement d'informations selon l'une quelconque des revendications 7 à 11, comprenant en outre la sélection de l'utilisateur en tant que fabricant ou la sélection d'un matériel fourni par l'utilisateur en tant que matériel à utiliser pour produire l'article en fonction de la demande reçue en provenance de l'utilisateur.

13. Procédé de traitement d'informations selon l'une quelconque des revendications 7 à 10, comprenant en outre l'avertissement de l'utilisateur du fait que l'article n'est pas productible en l'absence de combinaison du fabricant et du matériel correspondant à l'article pour définir le fabricant et le matériel.

14. Support de stockage non transitoire servant à produire un article à l'aide d'un corps mobile autonome et sur lequel sont stockées des instructions exécutables par un ou plusieurs processeurs et amenant le ou les processeurs de réaliser des fonctions, les fonctions comprenant :
la réception d'une demande de production d'article en provenance d'un utilisateur,
la définition d'un fabricant de l'article qui correspond à la demande reçue,
la définition d'un matériel à utiliser pour produire l'article qui correspond à la demande reçue,
l'obtention d'informations sur le site du fabricant défini et d'informations sur le site du matériel défini,
la génération d'une commande de manoeuvre destinée à un corps mobile (10) se déplaçant de manière autonome pour amener ledit corps mobile (10) à traverser le site du fabricant et le site du matériel en fonction des informations sur le site du fabricant obtenues et des informations sur le site du matériel obtenues, et
la définition de pièces qui constituent l'article en tant que matériel à utiliser pour produire l'article ;
ledit corps mobile étant un véhicule ;
**caractérisé en ce que**
le fabricant de l'article est une personne ou une machine qui monte dans le corps mobile et se déplace avec le corps mobile et
**en ce que** l'article est produit pendant que le véhicule se déplace vers un prochain point de passage.
